(19) Europäisches Patentamt
European Patent Office
Office européen des brevets

(11) EP 1 022 309 A1

# (12) DEMANDE DE BREVET EUROPEEN

(43) Date de publication:
**26.07.2000 Bulletin 2000/30**

(21) Numéro de dépôt: **00400013.9**

(22) Date de dépôt: **05.01.2000**

(51) Int. Cl.[7]: **C08L 29/04**, C08J 5/18, B32B 27/30, B65D 1/00 // (C08L29/04, 23:04, 23:04, 77:00), (C08L29/04, 23:04, 51:06, 77:00)

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **19.01.1999 FR 9900491**

(71) Demandeur: **ELF ATOCHEM S.A.**
**92800 Puteaux, Hauts-de-Seine (FR)**

(72) Inventeurs:
- **Bertin, Denis**
  **76970 Motteville (FR)**
- **Robert, Patrice**
  **27470 Serquigny (FR)**
- **Germain, Yves**
  **27470 Serquingny (FR)**

(74) Mandataire: **Neel, Henry et al**
**Elf Atochem S.A.,**
**DPI,**
**Cours Michelet,**
**La Défense 10**
**92091 Paris La Défense Cedex (FR)**

## (54) Composition à base d'un copolymère de l'éthylène et de l'alcool vinylique et son utilisation

(57) L'invention concerne une composition à base d'un copolymère de l'éthylène et de l'alcool vinylique comprenant :

- 50 à 98 % en poids d'un copolymère EVOH
- 1 à 50 % en poids d'un polyéthylène (A)
- 1 à 15 % en poids d'un polymère (B) résultant de la réaction (i) d'un copolymère (B1) de l'éthylène et d'un monomère insaturé X greffé ou copolymérisé avec (ii) un copolyamide (B2).

Elle concerne aussi une structure multicouche comprenant une couche constituée de cette composition. Celle structure est utile pour faire des emballages. La composition de l'invention présente aussi une bonne adhérence avec le PET, cette propriété est utile en coinjection pour faire des preformes biorientées.



Printed by Xerox (UK) Business Services
2.16.7 (HRS)/3.6

## Description

La présente invention concerne une composition à base d'un copolymère de l'éthylène et de l'alcool vinylique (EVOH) et son utilisation.

Les copolymères EVOH sont barrière à de nombreux gaz et en particulier à l'oxygène. De nombreux emballages alimentaires comprennent une couche constituée d'un film EVOH.

La présente invention concerne plus particulièrement des compositions comprenant (le total étant 100 %):

- 50 à 98 % en poids d'un copolymère EVOH
- 1 à 50 % en poids d'un polyéthylène (A)
- 1 à 15 % en poids d'un polymère (B) résultant de la réaction (i) d'un copolymère (B1) de l'éthylène et d'un monomère insaturé X greffé ou copolymérisé avec (ii) un polyamide (B2).

Les copolymères EVOH en général ont diverses excellentes propriétés telles qu'une propriété d'imperméabilité à l'oxygène, une résistance mécanique, etc..., et trouvent, en tant que tels, une application dans, de nombreuses utilisations comme films, feuilles, matériaux pour récipients, fibres textiles, etc. Cependant, ce copolymère donne naissance à une variation de l'épaisseur du produit dans le procédé de moulage pour la fabrication d'un film ou d'une feuille, avec une baisse consécutive de l'aptitude à la commercialisation du produit et, à cause du défaut d'étirabilité et de flexibilité, donne naissance à un tirage non uniforme au cours de l'emboutissage profond et d'autres procédés faisant intervenir une force d'étirement, ou des trous d'aiguille au cours de l'utilisation du produit, imposant ainsi de sérieuses limitations à son application comme matière première d'emballage. La barrière à l'oxygène des copolymères EVOH est fortement diminuée quand l'humidité relative (RH) augmente.

Pour surmonter ces inconvénients, on a tenté de stratifier une matière en résine imperméable, comme un film de polyoléfine, sur une feuille de copolymère EVOH ou d'améliorer l'étirabilité et la flexibilité du moulage en incorporant une polyoléfine dans le copolymère EVOH.

La demande de brevet EP 820381 décrit des mélanges de copolymère EVOH et de 5 à 60 % en poids d'un polymère polaire choisi parmi les copolymères éthylène - ester acrylique, les copolymères éthylène - acétate de vinyle, les copolymères éthylène - ester acrylique - anhydride d'acide carboxylique ou acide acrylique. Ces mélanges se transforment très mal dès que la quantité de polymère polaire dépasse 10 % en poids. La dispersion du copolymère polaire est très mauvaise ce qui donne de mauvaises propriétés mécaniques. Si la quantité de copolymère polaire dépasse 40 % en poids le mélange n'est plus barrière à l'oxygène.

La demande EP 440535 décrit des mélanges de 50 à 99,5 % de copolymère EVOH, de 0,4 à 50 % d'un polyéthylène de densité comprise entre 0,900 et 0,940 et du produit de réaction d'une polyoléfine greffée par un acide carboxylique insaturé avec un oligomère de polyamide. Les compositions de la présente invention sont barrière à l'oxygène et facilement transformables. D'autres avantages seront décrits au cours du texte.

L'invention va maintenant être décrite en détails.

Le copolymère EVOH et aussi appelé copolymère éthylène-acétate de vinyle saponifié.

Le copolymère éthylène-acétate de vinyle saponifié à employer selon la présente invention est un copolymère ayant une teneur en éthylène de 20 à 60 % en moles, de préférence de 25 à 55 % en moles, le degré de saponification de son composant acétate de vinyle n'étant pas inférieur à 95 % en moles.

Avec une teneur en éthylène inférieure à 20 % en moles, la propriété d'imperméabilité à l'oxygène dans des conditions de forte humidité n'est pas aussi élevée qu'on le souhaiterait, tandis qu'une teneur en éthylène dépassant 60 % en moles conduit à des baisses de la propriété d'imperméabilité à l'oxygène, de l'aptitude à l'impression et d'autres propriétés physiques. Lorsque le degré de saponification ou d'hydrolyse est inférieur à 95 % en moles, la propriété d'imperméabilité à l'oxygène et la résistance à l'humidité sont sacrifiées. Parmi ces copolymères saponifiés, ceux qui ont des indices de fluidité à chaud dans l'intervalle de 0,5 à 100 g/10 minutes sont particulièrement utiles.

Il est entendu que ce copolymère saponifié peut contenir de faibles proportions d'autres ingrédients comonomères, y compris des $\alpha$-oléfines comme le propylène, l'isobutène, l'$\alpha$-octène, l'$\alpha$-dodécène, l'$\alpha$-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

La perméabilité à l'oxygène des films de copolymères EVOH mesurée selon ASTM D 3985 s'exprime en $cm^3$ d'oxygène par $m^2$ pour 24 heures pour une différence de pression de 1 bar et une épaisseur de 25 $\mu$m. Par simplification on la désigne par $O_2$GTR dans la suite du texte.

$O_2$GTR varie proportionnellement avec l'inverse de l'épaisseur du film.

Un EVOH comprenant 38 % en mole de motifs éthylène a une $O_2$GTR de 0,72 pour 0 % RH et 3,1 pour 75 % RH.

Un EVOH comprenant 29 % en mole de motifs éthylène a une $O_2$GTR de 0,1 pour 0 % RH et 1,41 pour 75 % RH. Ces qualités sont produites industriellement et sont disponibles dans le commerce.

On utilise l'une ou l'autre de ces qualités en différentes épaisseurs selon la barrière demandée (nature du produit à conserver, durée de conservation...). La demanderesse a découvert que les compositions de l'invention à base d'un copolymère EVOH à 29 % molaire d'éthylène avaient en film les mêmes propriétés barrière qu'un film constitué essentiellement d'un copolymère EVOH à 38 % molaire d'éthylène mais étaient très facilement transformables. En effet le copolymère EVOH, bien qu'il soit thermoplastique, est très rigide. Son module de flexion est de l'ordre de 2000 MPa. Les compositions de l'invention ont un module de flexion de l'ordre de 1500 dès que la proportion du polyéthylène (A) est d'au moins 15 % en poids.

La demanderesse a aussi découvert que les films constitués des compositions de l'invention étaient beaucoup moins sensibles à l'humidité c'est-à-dire que $O_2$GTR à 75 % RH n'est que 1,3 à 9 fois $O_2$GTR à 0 % RH et de préférence 1,3 à 3,5 fois alors que pour les films en EVOH à 29 % d'éthylène ce facteur est de 14.

L'invention est particulièrement adaptée aux copolymères EVOH ayant des teneurs en éthylène allant de 25 à 45 % molaire et des MFI (Melt Flow Index ou indice d'écoulement à l'état fondu selon ASTM D 1238) allant de 1,5 à 4 (g/10 mn à 190°C sous 2,16 kg) et de 5 à 30 (g/10 mn à 230°C sous 2,16 kg).

S'agissant du polyéthylène (A), il est choisi parmi les polyéthylènes homo- ou copolymères.

A titre de comonomères, on peut citer

- les alpha-oléfines, avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadècéne, 1—eicocène, 1-dococène, 1-tétracocène, 1-hexacocène, 1—octacocène, et 1-triaconténe. Ces alpha-oléfines peuvent être utilisées seules ou en mélange de deux ou de plus de deux.

- les esters d'acides carboxyliques insaturés tels que par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.

- les esters vinyliques d'acides carboxyliques saturés tels que par exemple l'acétate ou le propionate de vinyle.
- les époxydes insaturés.

Des exemples d'époxydes insaturés sont notamment :

- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4, 5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.
- les acides carboxyliques insaturés, leurs sels, leurs anhydrides.

Des exemples d'anhydrides d'acide dicarboxylique insaturé sont notamment l'anhydride maléique, l'anhydride itaconique, l'anhydride citraconique, l'anhydride tétrahydrophtalique.

- les diènes tels que par exemple le 1,4-hexadiène.
- (A) peut comprendre plusieurs comonomères.

Avantageusement le polymère (A), qui peut être un mélange de plusieurs polymères, comprend au moins 50% et de préférence 75% (en moles) d'éthylène. La densité de (A) peut être comprise entre 0,86 et 0,98 g/$cm^3$. Le MFI (indice de viscosité à 190°C, 2,16 kg) est compris avantageusement entre 1 et 1000 g/10 min.

A titre d'exemple de polymères (A) on peut citer:

- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthamides peuvent aussi être utilisés.

- les élastomères EPR (éthylène - propylène - rubber)
- les élastomères EPDM (éthylène - propylène - diène)
- les mélanges de polyèthylène avec un EPR ou un EPDM
- les copolymères éthylène-(méth)acrylate d'alkyle pouvant contenir jusqu'à 60% en poids de (méth)acrylate et de préférence 2 à 40%
- les copolymères éthylène (méth)acrylate d'alkyle-anhydride maléique obtenus par copolymérisation des trois monomères, les proportions de (méth)acrylate étant comme les copolymères ci-dessus, la quantité d'anhydride maléique étant jusqu'à 10% et de préférence 0,2 à 6% en poids.
- les copolymères éthylène-acétate de vinyle-anhydride maléique obtenus par copolymérisation des trois monoméres, les proportions étant les mêmes que dans le copolymère précédent.

Avantageusement (A) est choisi parmi les copolymères de l'éthylène et des (méth)acrylates d'alkyle. L'alkyle peut avoir jusqu'à 24 atomes de carbone. De préférence les (méth)acrylates sont choisis parmi ceux cités plus haut. Les copolymères (A) comprennent avantageusement jusqu'à 40 % en poids de (méth)acrylate et de préférence 3 à 35 %. Leur MFI est avantageusement compris entre 0,1 et 50 (à 190°C - 2,16 kg).

Quant au polymère (B), on commence par préparer (B1) qui est soit un copolymère de l'éthylène et d'un monomère insaturé X, soit un polyéthylène sur lequel on greffe un monomère insaturé X. X est tout monomère insaturé pouvant être copolymérisé avec l'éthylène ou greffé sur le polyéthylène et possédant une fonction pouvant réagir avec un polyamide. Cette fonction peut être un acide carboxylique, un anhydride d'acide dicarboxylique, un epoxyde.....

A titre d'exemple de monomère X on peut citer l'acide (méth)acrylique, l'anhydride maléique,..... les epoxydes insaturés tels que le (méth)acrylate de glycidyle. On utilise avantageusement l'anhydride maléique. S'agissant des polyéthylènes greffés on peut greffer X sur les polyéthylènes qu'on a décrit sous (A). Le greffage est une opération connue en soi. S'agissant des copolymères de l'éthylène et du monomère X c'est-à-dire ceux dans lesquels X n'est pas greffé on utilise avantageusement les copolymères de l'éthylène anhydride maléique, éthylène - (méth)acrylate d'alkyle - anhydride maléique. Ces copolymères comprennent de 0,2 à 10 % en poids d'anhydride maléique, de 0 à 40 % en poids de (méth)acrylate d'alkyle. Leur MFI est compris entre 1 et 50 (190°C - 2,16 kg). Les (méth)acrylates d'alkyle ont déjà été décrits plus haut pour le polymère (A).

On entend par polyamide B2 les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique :
- ou des mélanges de plusieurs monomères ce qui conduit à des copolyamides.

On peut utiliser des mélanges de polyamides. On utilise avantageusement le PA-11, le PA 12, le copolyamide à motifs 6 et motifs 12 (PA-6/12), et le copolyamide à base de caprolactame, hexaméthylènediamine et acide adipique (PA-6/6.6).

(B2) est un polyamide ou un oligomère de polyamide. Des oligomères de polyamide sont décrits dans EP 342066.

Les polyamides B2 peuvent être à terminaisons acides, amine ou monoamine. Pour que le polyamide ait une terminaison monoamine il suffit d'utiliser un limiteur de chaîne de formule

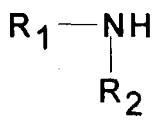

dans laquelle :

$R_1$ est l'hydrogène ou un groupement alkyle linéaire ou ramifié contenant jusqu'à 20 atomes de carbone,
$R_2$ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Avantageusement B2 est un PA-6, un PA-11 ou un PA-12.
La proportion de B2 dans B1 + B2 en poids est avantageusement comprise entre 0,1 et 60 %.
La réaction de (B1) avec (B2) s'effectue de préférence à l'état fondu. On peut par exemple malaxer (B1) et (B2) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.
Selon une forme préférée de l'invention le polyéthylène (A) est un copolymère éthylène - (méth)acrylate d'alkyle et le copolymère (B1) est un copolymère éthylène - (méth)acrylate d'alkyle - anhydride maléique. De préférence les (méth)acrylates de (A) et (B1) sont les mêmes.
Des compositions particulièrement avantageuses comprennent (le total étant 100 %) :

55 à 98 % de copolymère EVOH
1 à 44 % de polyéthylène (A)
1 à 10% de polymère (B)

de préférence

55 à 75 % de copolymère EVOH
15 à 25 % de polyéthylène (A)
5 à 15 % de polymère (B).

Les compositions de l'invention peuvent être préparées par mélange à l'état fondu dans des extrudeuses (mono ou bi vis), des malaxeurs BUSS,des mélangeurs BRABENDER et en général les dispositifs habituels de mélange des thermoplastiques.
Les compositions de l'invention sont particulièrement aptes à la transformation par les techniques usuelles des thermoplastiques. Elles peuvent êtres mises en film par exemple en cast ou en extrusion soufflage.
Les compositions de l'invention sont utiles comme couche barrière dans des emballages multicouches. Ils comprennent par exemple une couche de polyoléfine, un liant, une couche des compositions de l'invention, une couche de liant, une couche de polyoléfine.
Ils peuvent se présenter sous la forme d'emballages souples ou de bouteilles ou de réservoirs.
Ces emballages sont fabriqués par coextrusion ou par injection soufflage.
La demanderesse a aussi découvert que les compositions de l'invention presentaient une bonne adhérence avec le PET, ainsi dans les emballages les bouteilles et les réservoirs précédents il n'est pas néoessaire de mettre un liant entre ces compositions et le PET. Cette propriété est utile en coinjection pour fabriquer des preformes de bouteilles ou de flacons bi orientés.

<u>Exemples</u>

On a utiisé les matières suivantes :

| | |
|---|---|
| EVOH E | copolymère éthylène - alcool vinylique à 38 % molaire d'éthylène MFI 8 (210°C -2,16 kg), température de fusion 183°C, température de cristallisation 160°C, Tg (température de transition vitreuse) 61°C. |
| EVOH D | copolymère éthylène alcool vinylique à 29 % molaire d'éthylène, MFI 8 (210°C - 2,16 kg), température de fusion 188°C, température de cristallisation 163°C, Tg (température de transition vitreuse) 62°C. |
| LOTRYL 24MA005 | copolymère éthylène - acrylate de méthyle à 24 % en poids d'acrylate et MFI 5 (190°C - 2,16 kg) |
| POLYMERE (B) | un copolymère (B1) éthylène - méthyl acrylate - maléic anhydride à 16 % en poids d'acrylate et 4 % en poids d'anhydride MFI 5 (190°C - 2,16 kg) (Lot 3410) puis on a fait réagir (B1) avec différents polyamides B2 ; on a ainsi préparé 3 polymères (B) qu'on a appelé B-G1, B-G2, B-G3. |
| B-G1 | B2 est un oligomère de PA-6 mono aminé de MFI 3 à 4. B2 / B1 + B2 = 45 % en poids |

B-G2 62 est un PA-11 de MFI 2 (235°C - 2,16 kg) et température de fusion 183°C (BESNO A) - B2 / B1 + B2 = 60 % en poids

B-G3 B2 est un PA-11 de MFI 1,3 (235°C - 2.16 kg) et température de fusion 180°C (KESNO A). B2 / B1 + B2 = 60 % en poids.

On a préparé par extrusion cast des films de 25 µm. La perméabilité à l'oxygène a été mesurée par appareil OXTRAN 2/20.

Les résultats sont reportés sur le tableau 1 (les proportions sont en poids).

| Exemples | | 1 | 2 | 3 | 4 | 5 | 6 |
|---|---|---|---|---|---|---|---|
| EVOH E | | 100 | | | | | |
| EVOH D | | | 100 | 70 | 60 | 60 | 60 |
| LOTRYL 24MA005 | | | | 20 | 30 | 30 | 30 |
| B-G1 | | | | 10 | 10 | | |
| B-G2 | | | | | | 10 | |
| B-G3 | | | | | | | 10 |
| $O_2GTR$ | (1) RH 0 % 23°C | 0,72 | 0,1 | 0,61 | 3,55 | 2,05 | 0,62 |
| | RH 75 % 23°C avec conditionnement eau 14 h | 3,29 | | 6,79 | 13,05 | | |
| | (2) RH 75 % 23°C | 3,1 | 1,41 | 5,6 | 11,30 | 2,84 | 2 |
| Rapport (2) / (1) $O_2GTR$ 75 % RH / $O_2GTR$ 0 % RH | | 4 | 14,1 | 9 | 3 | 1,4 | 3,2 |

Tableau 1

## Revendications

1. Composition à base d'un copolymère de l'éthylène et de l'alcool vinylique comprenant :

   - 50 à 98 % en poids d'un copolymère EVOH
   - 1 à 50 % en poids d'un polyéthylène (A)
   - 1 à 15 % en poids d'un polymère (B) résultant de la réaction (i) d'un copolymère (B1) de l'éthylène et d'un monomère insaturé X greffé ou copolymérisé avec (ii) un copolyamide (B2).

2. Composition selon la revendication 1 dans laquelle le polyéthylène (A) est un copolymère éthylène - (méth)acrylate d'alkyle.

3. Composition selon la revendication 1 ou 2 dans laquelle B1 est un copolymère de l'éthylène et de l'anhydride maléique (X) l'anhydride étant greffé ou copolymérisé.

4. Composition selon la revendication 3 dans laquelle B1 est un copolymère de l'éthylène, d'un (méth)acrylate d'alkyle et de l'anhydride maléique.

5. Structure multicouches comprenant une couche constituée de la composition selon l'une des revendications 1 à 4.

**6.** Emballages, bouteilles ou réservoirs comprenant la structure multicouches de la revendication 5.

**7.** Films constitués des compositions selon l'une quelconque des revendications 1 à 4 ayant une perméabilité à l'oxygène à 75 % d'humidité relative de 1,3 à 9 fois et de préférence de 1,3 à 3,5 fois la perméabilité à l'oxygène à 0 % d'humidité relative.

**8.** Utilisation des compositions selon l'une quelconque des revendications 1 à 4 en coinjection avec le PET pour faire des preformes de bouteilles ou de flacons biorientés.

Office européen des brevets

# RAPPORT DE RECHERCHE EUROPEENNE

Numéro de la demande
EP 00 40 0013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 441 666 A (ATOCHEM ELF SA) 14 août 1991 (1991-08-14) * page 3, ligne 19 - ligne 22; revendications; exemples * | 1-8 | C08L29/04 C08J5/18 B32B27/30 B65D1/00 //(C08L29/04, 23:04,23:04, 77:00), (C08L29/04, 23:04,51:06, 77:00) |
| D,X | EP 0 440 535 A (ATOCHEM ELF SA) 7 août 1991 (1991-08-07) * page 3, ligne 6 - ligne 8 * * page 3, ligne 36 - ligne 44; revendications; exemples * | 1-7 | |
| X | EP 0 440 557 A (ATOCHEM ELF SA) 7 août 1991 (1991-08-07) * page 3, ligne 47 - ligne 52; revendications; exemples * * page 5, ligne 25 - page 6, ligne 41 * | 1,3-7 | |
| X | EP 0 483 695 A (NIPPON SYNTHETIC CHEM IND) 6 mai 1992 (1992-05-06) * revendications; exemples * | 1,3,5-7 | |
| | | | **DOMAINES TECHNIQUES RECHERCHES (Int.Cl.7)** |
| X | EP 0 444 977 A (ATOCHEM ELF SA) 4 septembre 1991 (1991-09-04) * revendications; exemples * | 1,3,5-7 | C08L C08J B32B B65D C08G |
| X | EP 0 440 560 A (ATOCHEM ELF SA) 7 août 1991 (1991-08-07) * page 4, ligne 1 - ligne 10; revendications; exemples * | 1,3,5-7 | |
| X | EP 0 440 558 A (ATOCHEM ELF SA) 7 août 1991 (1991-08-07) * revendications; exemples * | 1,3,5-7 | |
| X | FR 2 677 988 A (NIPPON SYNTHETIC CHEM IND) 24 décembre 1992 (1992-12-24) * page 2, ligne 33 - page 5, ligne 18; revendications * | 1,7 | |

Le présent rapport a été établi pour toutes les revendications

| Lieu de la recherche | Date d'achèvement de la recherche | Examinateur |
|---|---|---|
| LA HAYE | 12 mai 2000 | DE LOS ARCOS, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 00 40 0013

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

12-05-2000

| Document brevet cité au rapport de recherche | Date de publication | Membre(s) de la famille de brevet(s) | Date de publication |
|---|---|---|---|
| EP 0441666 A | 14-08-1991 | FR 2657070 A | 19-07-1991 |
| | | AT 135726 T | 15-04-1996 |
| | | AU 649641 B | 02-06-1994 |
| | | AU 6935591 A | 18-07-1991 |
| | | CA 2034093 A | 16-07-1991 |
| | | CN 1054082 A,B | 28-08-1991 |
| | | CN 1121089 A | 24-04-1996 |
| | | DE 69118000 D | 25-04-1996 |
| | | DE 69118000 T | 05-09-1996 |
| | | DK 441666 T | 22-07-1996 |
| | | ES 2085444 T | 01-06-1996 |
| | | FI 910184 A | 16-07-1991 |
| | | GR 3020026 T | 31-08-1996 |
| | | IL 96911 A | 29-12-1994 |
| | | JP 2029967 C | 19-03-1996 |
| | | JP 4211443 A | 03-08-1992 |
| | | JP 7057834 B | 21-06-1995 |
| | | KR 165125 B | 20-03-1999 |
| | | NO 910153 A | 16-07-1991 |
| | | PT 96475 A | 15-10-1991 |
| | | US 5489478 A | 06-02-1996 |
| | | US 5274030 A | 28-12-1993 |
| | | ZA 9100294 A | 30-10-1991 |
| EP 0440535 A | 07-08-1991 | JP 2828300 B | 25-11-1998 |
| | | JP 3227344 A | 08-10-1991 |
| | | CA 2035567 A | 02-08-1991 |
| | | FI 910461 A | 02-08-1991 |
| | | US 5298334 A | 29-03-1994 |
| | | US 5310788 A | 10-05-1994 |
| EP 0440557 A | 07-08-1991 | JP 2860127 B | 24-02-1999 |
| | | JP 3227346 A | 08-10-1991 |
| | | CA 2035569 A | 02-08-1991 |
| | | FI 910463 A | 02-08-1991 |
| | | US 5177138 A | 05-01-1993 |
| EP 0483695 A | 06-05-1992 | JP 2892485 B | 17-05-1999 |
| | | JP 4164943 A | 10-06-1992 |
| | | JP 2892486 B | 17-05-1999 |
| | | JP 4164944 A | 10-06-1992 |
| | | JP 2940632 B | 25-08-1999 |
| | | JP 4164945 A | 10-06-1992 |
| | | JP 2940633 B | 25-08-1999 |
| | | JP 4164946 A | 10-06-1992 |
| | | DE 69122469 D | 07-11-1996 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE RELATIF A LA DEMANDE DE BREVET EUROPEEN NO. EP 00 40 0013

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

12-05-2000

| Document brevet cité au rapport de recherche | Date de publication | Membre(s) de la famille de brevet(s) | Date de publication |
|---|---|---|---|
| EP 0483695 A | | DE 69122469 T | 20-02-1997 |
| | | US 5298334 A | 29-03-1994 |
| | | US 5310788 A | 10-05-1994 |
| | | US 5280065 A | 18-01-1994 |
| | | US 5177138 A | 05-01-1993 |
| | | US 5214090 A | 25-05-1993 |
| EP 0444977 A | 04-09-1991 | JP 2865352 B | 08-03-1999 |
| | | JP 3227345 A | 08-10-1991 |
| | | CA 2035568 A | 02-08-1991 |
| | | FI 910462 A | 02-08-1991 |
| | | US 5280065 A | 18-01-1994 |
| EP 0440560 A | 07-08-1991 | JP 2860129 B | 24-02-1999 |
| | | JP 3227348 A | 08-10-1991 |
| | | CA 2035571 A | 02-08-1991 |
| | | FI 910466 A | 02-08-1991 |
| | | US 5160475 A | 03-11-1992 |
| EP 0440558 A | 07-08-1991 | JP 2860128 B | 24-02-1999 |
| | | JP 3227347 A | 08-10-1991 |
| | | CA 2035572 A | 02-08-1991 |
| | | FI 910464 A | 02-08-1991 |
| | | US 5214090 A | 25-05-1993 |
| FR 2677988 A | 24-12-1992 | JP 4372639 A | 25-12-1992 |
| | | DE 4220377 A | 07-01-1993 |
| | | GB 2257148 A,B | 06-01-1993 |
| | | US 5338502 A | 16-08-1994 |

EPO FORM P0460

Pour tout renseignement concernant cette annexe : voir Journal Officiel de l'Office européen des brevets, No.12/82